# EUROPEAN PATENT SPECIFICATION

(11) **EP 0 901 416 B1**
(45) Date of publication and mention of the grant of the patent: **27.03.2002**
(21) Application number: 97924966.1
(22) Date of filing: 21.05.1997
(51) Int. Cl.: B60B 21/00, B60B 21/04, B60B 21/10

(54) **WHEEL FOR VEHICLES**
RAD FÜR FAHRZEUGE
ROUE POUR VEHICULES

(30) Priority: 28.05.1996 IT VI960087
(43) Date of publication of application: 17.03.1999
(73) Proprietor: Quaresimin, Marino, 36100 Vicenza (IT)
(72) Inventor: Quaresimin, Marino, 36100 Vicenza (IT)
(74) Representative: O'Byrne, Daniel Joseph
(86) International application number: EP9702582
(87) International publication number: WO9745276

(56) References cited:
- EP-A- 0 390 300
- EP-A- 0 579 525
- FR-A- 2 702 707
- US-A- 1 938 862
- US-A- 5 249 846

## Description

The present invention relates to a wheel for vehicles, particularly but not exclusively for cycles and motorcycles, and to a method for producing the wheel.

Generally, wheels for cycles and motorcycles are constituted by an outer circular part or rim which is connected coaxially to a central part or hub by a plurality of wire or solid spokes which are substantially radial and in any case lie on a plane which is transverse to the axis of the hub.

Wheels of the type indicated above can be used with some particular refinements even for other heavier vehicles, such as for example cars.

Wire-spoked or solid-spoked wheels differ in the type of material used, in the production processes, and in the structural choices.

With particular reference to the materials, two categories of wheels can be distinguished: in particular, those made of metallic material and those made of reinforced composite material. Mention can be made, for example, of steels and aluminum, magnesium and titanium alloys among the various materials of the first group. As regards the second group, instead, the most widely used materials are polymeric ones, reinforced with fibers of various kinds (carbon, kevlar, glass, et cetera).

Depending on the structural choices, the wheels can be classified as solid-spoked or wire-spoked wheels.

In the first case, the wheels can be monolithic and obtained by casting molten alloys in suitable dies, or can be composite, that is to say, obtained by assembling in various ways the hub, the solid spokes and the rim, which are obtained separately with different materials and technologies. In the second case, instead, the distance between the hub and the rim and the transmission of the system of forces involved are ensured by wire spokes which are appropriately tensioned.

With reference to the geometries of solid-spoked and wire-spoked wheels, the profile and the dimensions of the rim are standardized according to specific standards, such as for example the ETRTO (European Tyre and Rim Technical Organisation) European standards.

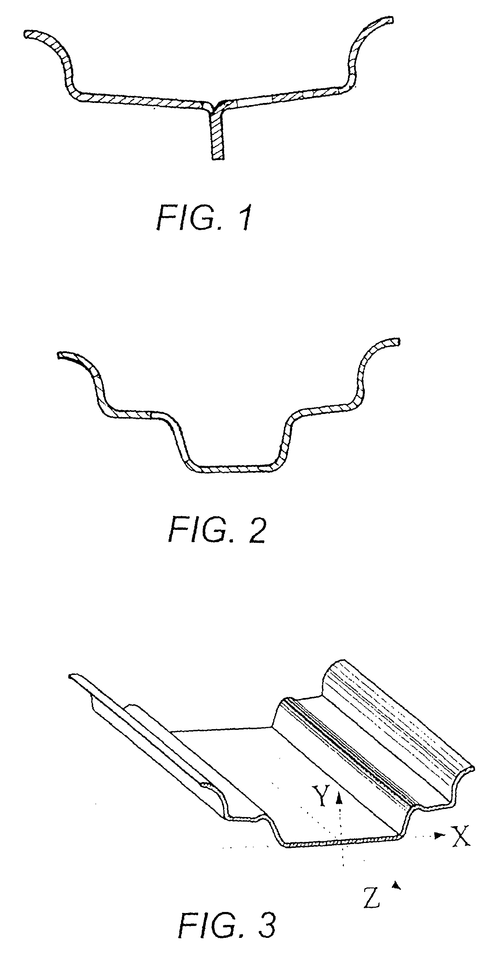

Figures 1 and 2 illustrate shapes of rims which are standardized according to the above standards. The geometric and size constraints essentially relate to the side of the rim which is in contact with the tire.

For metallic wire-spoked wheels, it must be specified that the production of the rim generally starts from a metal profile which has a suitable cross-section or from an appropriately shaped metal strip which is initially curved so as to form a ring whose diameter is equal to that of the wheel to be produced. Then the two ends of the ring are welded with various methods (flash welding, resistance welding or other equivalent methods). Then the joint is finished, followed by boring according to the number of wire spokes of the wheel, and finally the hub is assembled with the wire spokes and the wire spokes are tensioned.

In the case of profiles which have a hollow cross-section, the presence of the bores for the wire spokes may allow water to penetrate inside the rim in such an amount as to compromise the correct operation and stability of the vehicle.

In the case of wheels made of reinforced polymeric material, the structures are generally produced according to the solid-spoke type and the rim is produced by virtue of a sheet of composite material of adequate thickness, which is shaped appropriately and to which the solid spokes are connected for example by gluing.

The solid spokes are also generally made of composite material, with a structure which may also be of the sandwich type, that is to say, produced by means of a hollow member with a core made of a material which has suitable mechanical properties. The connection of the hub to the solid spokes is also generally performed by gluing.

Vehicle wheels must have static and dynamic strength (fatigue strength) properties and other properties which are briefly referenced as rigidity, lightness and aerodynamic efficiency.

As regards structural rigidity, which is directly linked to the road-holding and driving qualities of the vehicle, it is the result of the combined effect of radial rigidity, which is linked to the deformability of the wheel due to radial loads directed toward the center of the hub, as shown schematically in Figure 3; of transverse rigidity, which is linked to the deflection of the wheel due to loads directed along the axis of the hub, with simple resting constraints applied to the rim in two diametrically opposite points, as shown schematically in figure 4; and of tangential rigidity, which is linked to the rotation of the wheel about the hub as a consequence of the application of two diametrically opposite and equally intense tangent forces which lie on the plane of the wheel, as shown schematically in Figure 5.

The weight of the wheel is obviously a parameter which depends on the wheel type, on the materials used, on the geometry of the wheel and on the number of wire spokes or solid spokes. Of course, the lower the weight of the wheel, other characteristics (rigidity and aerodynamic efficiency) being equal, the higher the value perceived by the user.

The aerodynamic efficiency of the wheel is highly dependent on the shape of the rim and on the number and shape of the wire spokes or solid spokes. In general, it is possible to say that the smaller the number of wire spokes, the higher the aerodynamic efficiency of the wheel. Rim geometry being equal, the number of wire spokes affects the rigidity of the wheel and therefore its weight.

A disadvantage of conventional wheels is that in order to increase the rigidity of a rim it is normally necessary to accept an almost proportional increase in weight.

EP-A-0 368 480 discloses a vehicle wheel which has a circular outer part joined to a central hub by means of a plurality of solid spokes, in which the solid spokes have an aerodynamic profile with a leading edge and a trailing edge with a specific aspect ratio along its longitudinal extension. The wheel has an inner core made of foam which is covered by a composite material, such as carbon, glass or polyethylene fiber.

The shape of this wheel has been studied to achieve high aerodynamic efficiency not only of the outer rim but also of the solid spokes and of the regions for connection to the central hub. However, this type of structure cannot be used for metal wheels. Furthermore, the production method requires the provision of a number of cores which is equal to the number of rim shapes to be produced, with a considerable increase in production costs.

Other wheel structures are known which have rims made of synthetic polymeric material with structural foam inserts placed in a circumferential cavity before the molding step (see e.g. US-A-5 249 846, corresponding to the preamble of claim 1). The inserts placed inside the structure only partially improve the mechanical properties of the final product, because they are subjected to considerable deformations during molding. Furthermore, the process for preforming and inserting the inserts is expensive and negatively affects production costs.

The aim of the following invention is to improve the products of the prior art by providing a wheel which offers characteristics of high mechanical rigidity and fatigue strength, so as to achieve greater travel safety and better directionality of the vehicle.

A particular object is to provide a wheel characterized by increases in the inertial parameters of the resisting cross-section which are considerably higher than the weight increase, all other structural conditions, such as the shape, number and state of tension of the connecting members, and the cross-section and structure of the hub, being equal.

Another object is to provide a wheel which has a smaller number of members for mutually connecting the rim and the hub, with a consequent reduction in weight and aerodynamic drag and therefore energy consumption.

Another object is to eliminate infiltrations of water in the rim.

Another object is to simplify and reduce the cost of the method for manufacturing the wheel according to the invention.

This aim, these objects and others are achieved by a vehicle wheel according to claim 1.

The wheel has extremely high-level properties in terms of resistance to static and dynamic loads by virtue of the complete filling of the closed circumferential cavity of the outer circular part with a structural filler material and by virtue of the adhesion of the material to the inner walls of the cavity.

The wheel improves the inertial parameters of the resisting cross-section which are considerably greater than the weight increase, with an equal number and state of tension of the connecting members and with an equal cross-section and structure of the hub.

Claim 9 describes the method for producing the above wheel.

Further characteristics and advantages of the invention will become apparent from the detailed description of the following preferred but not exclusive embodiment of a vehicle wheel according to the invention, illustrated only by way of non-limitative example in the accompanying drawings, wherein:
Figures 1 and 2 are views of transverse profiles of rims of the known art, executed according to ETRTO standards;
Figure 3 is a sectional perspective view, taken along an axial plane, of a portion of a rim with open cross-section according to the prior art and with no members for connection to the hub, associated with a system of X-Y-Z axes for calculating inertial parameters;

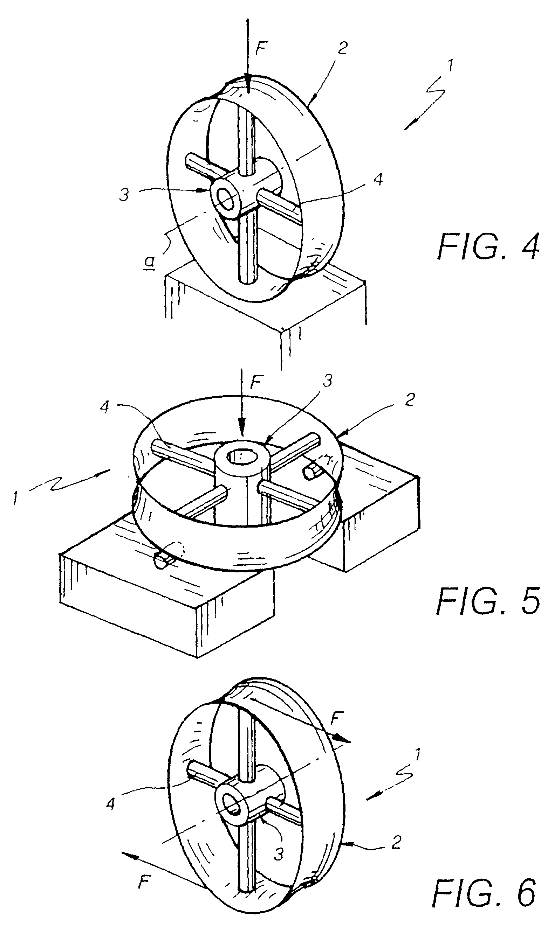

Figures 4, 5 and 6 are schematic views of load conditions for the wheel according to the invention;

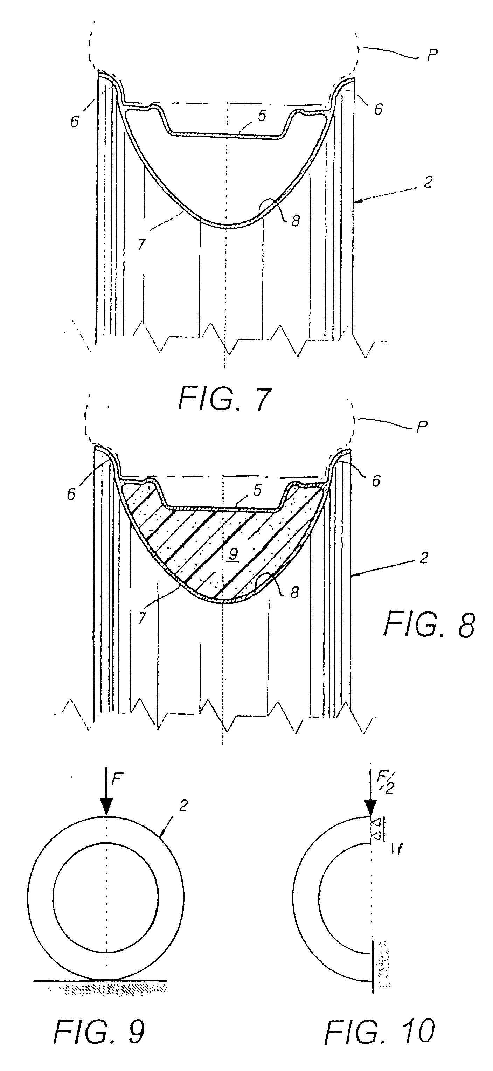

Figure 7 is a sectional view, taken along an axial plane, of a closed-profile rim according to the prior art, without connecting members;
Figure 8 is a sectional view, taken along an axial plane, of a wheel according to the invention and without connecting members;
Figures 9 and 10 are schematic views of the conditions for simulating a load for a wheel according to the invention.

With reference to the figures, a wheel according to the invention, generally designated by the reference numeral 1, comprises an external cylindrical part or rim 2 which is joined to a central hub 3 which has an axis a by means of a plurality of connecting members 4.

In the illustrated embodiment, the connecting members 4 are constituted by wire spokes whose ends are connected both to the hub 3 and to the rim 2 by means of coupling parts of a per se known kind, not shown in the drawings, which allow to vary the tension on the rim.

As an alternative, the connecting members 4 can be constituted by solid spokes which lie on a plane which is transverse with respect to the axis a and are connected to, or monolithic with, the hub and the rim.

The outer cylindrical part 2 has a partially closed profile which is divided by a mixtilinear wall 5 into an open outer portion and a closed inner portion.

The outer portion has raised edges 6 which are suitable to accommodate a tire, generally designated by the discontinuous line P, while the inner portion is formed by a side wall 7 which is generally lobe-shaped and forms a circumferential cavity 8. Of course, the cavity 8 may have multiple lobes which are preferably symmetrical with respect to a sagittal plane V which lies at right angles to the axis a of the wheel, without modifying the effects of the invention.

It is noted that the rim according to the prior art shown in figure 7 is also partially closed and has mechanical characteristics which are already considerably improved with respect to the open-profile rim shown in Figure 3.

According to the invention, the circumferential cavity formed by the side wall 7 and by the dividing wall 5 is uniformly filled with a suitable material 9 which has physical properties, in terms of elasticity moduli and density, comparable to those shown in Table 1 and is suitable to fully adhere to the inner surface of the cavity 8 and to become an integral part of the structure.

Preferably, the structural filler material is a foaming polymeric material, for example of the closed-cell type.

As an alternative, the structural filler material can be an injectable polymeric material or a fiber-reinforced polymeric material.

Table I below lists, in the first column, some possible filler materials 9 for the cavity 8; the second and third columns list the corresponding elasticity modulus E (in tension or compression) and shear elasticity modulus G and the fourth column lists the density.

**Table I -**

| **Filler materials** | | | |
|---|---|---|---|
| Material | E compression elasticity modulus (MPa) | G shear elasticity modulus (MPa) | Density ρ (kg/m³) |
| | | | |
| Foamed polyurethane | 5ö50 | 5ö15 | 40ö140 |
| Foamed PVC | 40ö220 | 15ö65 | 40ö140 |
| Foamed polymethacrylimide | 75ö260 | 20ö150 | 52ö200 |
| Foamed epoxy resin | 270ö1200 | 100ö400 | 250ö600 |
| Polymeric material | 2000ö8000 | 700ö2500 | 1100ö1400 |

In a preferred embodiment, the rim 2 is made of a metallic material. As an alternative, the rim 2 can be made of a fiber-reinforced polymeric material.

Table II below lists the physical and mechanical characteristics of materials used to form the rim 2.

**Table II -**

| **Materials for forming the rim** | | | |
|---|---|---|---|
| Material | E tensile elasticity modulus (MPa) | G shear elasticity modulus (MPa) | Density ρ (kg/m³) |
| | | | |
| Aluminum alloys | 60000 ö 80000 | 20000ö30000 | 2400ö2800 |
| Titanium alloys | 100000ö110000 | 39000ö42000 | 4300ö4800 |
| Steel | 200000ö210000 | 75000ö80000 | 7500ö7900 |
| Laminated composite materials (*) | 60000ö300000 | 2000ö9000 | 1300-1800 |

| | | | |
|---|---|---|---|
| (*) unidirectional or woven epoxy-matrix laminates reinforced with carbon, kevlar or glass fibers | | | |

An exceptional increase in structural characteristics, with an equal weight and with equal constraint conditions of the stressed structure, has surprisingly been observed.

In order to theoretically verify the validity of the choices made, a numeric simulation of the radial rigidity test alone, related only to the rim without the connecting member, was conducted according to the stress diagram shown in Figure 3 in the three possible geometries A), B) and C) provided for the cross-section of the rim, which are illustrated respectively in Figures 3, 7 and 8; the first two figures illustrate the state of the art and the third one illustrates the wheel according to the invention.

The radial and transverse rigidities are affected by the values of the moments of inertia of the cross-section, which are designated respectively by Jxx, Jyy and Jzz.
The constraint and loading conditions related to the radial rigidity test and the geometric symmetry allow to perform the analysis on just half of the model, as shown schematically in Figure 10, saving time during modelling and solution.

The finite-element method (FEM) was used to simulate the test. A mathematical model of the rim was used by dividing its structure into a certain number of solid elements (bricks) having adequate characteristics. The resulting model was then given the mechanical and physical characteristics of the materials that constitute the rim and the constraint and loading conditions suitable for the test to be simulated were applied.

By applying elasticity theory and other suitable algorithms to each element, it is possible to calculate the tension on the rim and its deformation as a function of the applied loads, particularly the deflection at the point where the load is applied. The ratio between the applied load and the measured deflection indicates the sought radial rigidity.

The models for the three profile geometries were produced with the following meshing methods:
profile A) model with 1440 brick elements (8 nodes) and 3055 nodes
profile B) model with 2640 brick elements (8 nodes) and 5209 nodes
profile C) model with 3744 brick elements (8 nodes) and 4789 nodes

The materials used in the simulation were aluminum alloy for the profile (E = 70000 MPa, [ρ] = 2700 kg/mⁿ, ν ] = 0.3) and structural foam for the filler material(E = 200 MPa, [ρ] = 130 kg/mⁿ, [ν] = 0.5).

Table III below lists, for each model, the inertial characteristics Jxx, Jyy and Jzz of the cross-section, the mass, the applied load, and the measured deformations.

**Table III -**

| **Simulation results** | | | |
|---|---|---|---|
| Characteristic | Profile **A** | Profile **B** | Profile **C** |
| Jxx(mm⁴) | 7,63·10⁴ | 29,5·10⁴ | 89,2·10⁴ |
| Jyy(mm⁴) | 13,4·10⁵ | 9,4·10⁵ | 29,1·10⁵ |
| Jzz (mm⁴) | 1,4·10⁶ | 1,2·10⁶ | 3,8·10⁶ |
| Mass of rim M (kg) | 2,627 | 1,936 | 2,348 |
| Applied load F (N) | 5000 | 5000 | 5000 |
| Deflection f (mm) | 6,89 | 0,65 | 0,03 |
| Radial rigidity Kr=F/f(N/mm) | 730 | 7700 | 167000 |
| Specific radial rigidity Kr/M [N/(mm kg)] | 270 | 3900 | 71000 |

Analysis of the results clearly shows a very significant increase in radial rigidity and in specific radial rigidity in passing from profile A to model C. Taking profile A as reference, radial rigidity (N/mm) increases by more than 10 times by passing to profile B and by more than 200 times by passing to profile C. In any case, it must be stressed that the presence of the connecting members tends to level out and reduce the great differences observed, without however substantially altering the end result.

One possible method for producing the wheel according to the invention entails the initial forming of the outer circular part 2 by using relatively rigid material, so as to form inside it at least one closed circumferential cavity 8, followed by the forming of the central hub 3 and its connection to the outer circular part 2 in a position which is coaxial to the part by means of the wire-spoke or solid-spoke connecting members 4.

With respect to conventional methods of the prior art, there is a step for the complete filling of the closed circumferential cavity 8 with a structural material 9 which has physical properties, in terms of elasticity muduli and density, comparable to those shown in Table 1, so that it adheres uniformly to the inside walls of the cavity.

The structural filler material can be a reactive polymeric material, in which case it is foamed inside the circumferential cavity, or can be a polymeric material, in which case it is injected into the cavity.

The outer circular part or rim 2 can be made of reinforced polymeric material by means of processes chosen among molding, autoclave-molding, resin transfer or injection.

As an alternative, the rim 2 can be made of optionally reinforced metallic material by means of processes chosen among extrusion, die-casting, casting, or pipe-forming.
In the latter case, it is possible to start from a portion of a metal profile whose length is equal to, or a multiple of, the circumferential extension of the wheel and is appropriately curved and joined at its ends.

In this case, the step for filling the cavity 8 can be easily performed on the finished circular part, that is to say, after its complete forming.

However, this filling step may also be performed before or during the step for forming the outer circular part, for example before or during the bending and calendering of the profile, with beneficial effects also on the quality of the forming process and of the finished product.

In this manner, it is possible to reduce the thickness of the wall of the rim while increasing the performance of the component.

It is in fact known that the calendering of profiles having very thin walls causes considerable problems due to elastic instabilities (buckling) which occur on the side walls of the rim, where thickness is in fact lower.

The calendering of already-foamed profiles could partially solve the problem, but it would entail damage to the filler material and its separation from the inside walls of the cavity, reducing the structural effect of the material.

The adoption of parallel and substantially simultaneous production processes should instead solve the problem without drawbacks. The calendering of a profile having low thicknesses and a hollow cross-section filled with an appropriate material eliminates the current instability problems, utilizing the principle which is usually applied to bend pipes without risking breakage.

For this purpose, it is possible to exploit the property of all foamed polymeric materials having a rather long reaction and cross-linking time of 2 to 3 minutes, which can optionally be modified by the manufacturer with the addition of suitable additives. During foaming, the consistency of the material changes, passing from liquid to final foam, with variable degrees of rigidity.

The polymeric material is thus injected into the profile to be formed, waiting until the material is rigid enough to ensure the stability of the walls of the profile but still deformable enough to avoid breaking, and then the rim is formed.

Therefore, filling of the circumferential cavity of the rim performed before or during forming can lead to an improvement in the structural characteristics of the rim and can allow the forming of rims in which the thicknesses are smaller than those which can currently be used.

From the above, it is evident that the wheel and the manufacturing method according to the invention achieve the intended aim and all the intended objects and in particular allow to increase the specific rigidity of the finished product, other conditions being equal, to reduce the number of wire spokes or solid spokes and therefore the weight of the wheel and its aerodynamic drag, with a consequent reduction in fuel consumption due to the lower weight and better aerodynamic efficiency, to increase the directional stability and travel safety of the vehicle due to the greater rigidity of the wheels, and finally to provide protection against the infiltration of water into the rim.

## Claims

1. Vehicle wheel, particularly for cycles and motorcycles, comprising an outer circular part or rim (2) adapted to support a tire (P) and having at least one circumferential closed inner cavity (8), a central hub (3) which is coaxial to said circular part and substantially radial members (4) for mutually connecting said outer part (2) and said hub (3), **characterized in that** said circumferential inner cavity (8) is uniformly filled with a continuous structural material (9), provided by injection, and having high compression elasticity modulus, high shear elasticity modulus and a low density, said material being continuous and adhering completely to the inner surface of said circumferential inner cavity (8).

2. Wheel according to claim 1, wherein the transverse cross-section of said circular part (2) has a profile which has at least one inner closed portion (7) which forms said circumferential cavity (8) and an outer peripheral portion (5, 6) which forms the seat for a tire (P).

3. Wheel according to claim 1, wherein said at least one closed portion (7) has a lobate shape with one or more lobes and is approximately symmetrical with respect to the main plane of arrangement of the wheel, which is substantially perpendicular to its axis (a).

4. Wheel according to claim 1, wherein said structural material (9) is a foaming polymeric material.

5. Wheel according to claim 4, wherein said structural material (9) is an injectable polymeric material.

6. Wheel according to claim 4 or 5, wherein said structural material (9) is a reinforced polymeric material.

7. Wheel according to claim 1, wherein said outer circular part (2) is made of an optionally reinforced metallic material.

8. Wheel according to claim 1, wherein said outer circular part (2) is made of a possibly reinforced polymeric material.

9. Method for producing a vehicle wheel, comprising the steps of:
a) forming an outer circular part made of a rigid material, in which at least one closed circumferential cavity is formed;
b) forming a central hub made of a rigid material;
c) connecting said central hub to the outer circular part, coaxially thereto, by virtue of substantially radial connecting members;
**characterized in that** it further comprises the step of
d) injecting a structural material in said at least one closed circumferential cavity of the outer circular part; said structural material having a high compression elasticity modulus and shear elasticity modulus and a low density, said material filling said cavity being continuous and adhering uniformly to the inside walls of the cavity.

10. Method according to claim 9, wherein the cavity filling step is performed after the step for forming the outer circular part.

11. Method according to claim 9, wherein the cavity filling step is performed before or during the step for forming the outer circular part.

12. Method according to claim 9, wherein said structural filler material is a reactive polymeric material foamed inside said at least one circumferential cavity.

13. Method according to claim 9, wherein said structural material is a polymeric material in the plastic state, injected in said at least one circumferential cavity.

14. Method according to claim 9, wherein said outer circular part is produced with processes chosen for example among extrusion, molding, casting or forming of profiles, all using optionally reinforced metallic material.

15. Method according to claim 14, wherein said outer circular part is produced starting from a portion of a profile whose length is equal to, or a multiple of, the circumference of the wheel and is appropriately curved and joined at its ends.

16. Method according to claim 9, wherein said outer circular part is produced with processes which are chosen, for example, among molding, autoclave-forming, resin transfer, or injection of possibly reinforced polymeric materials.

## Patentansprüche

1. Fahrzeugrad, insbesondere für Fahrräder und Motorräder, mit einem äußeren kreisförmigen Teil oder Felge (2), die ausgebildet ist einen Reifen (P) zu tragen und mindestens eine am Umfang gelegene, geschlossene innere Öffnung (8), eine zentrale Nabe (3), die koaxial ist zu dem kreisförmigen Teil, und im wesentlichen radiale Elemente (4) zur wechselseitigen Verbindung des äußeren Teils (2) und der Nabe (3) aufweist, **dadurch gekennzeichnet, dass** die am Umfang gelegene, innere Öffnung (8) gleichförmig gefüllt ist mit einem kontinuierlichen, strukturellen Material (9), das durch Einspritzung zur Verfügung gestellt ist und einen hohen Kompressions-Elastizitätsmodul, hohen Schub-Elastizitätsmodul und niedrige Dichte aufweist, wobei dieses Material kontinuierlich ist und vollständig an der inneren Oberfläche der am Umfang gelegenen, inneren Öffnung (8) anliegt.

2. Rad gemäß Anspruch 1, **dadurch gekennzeichnet, dass** der transversale Querschnitt des kreisförmigen Teils (2) ein Profil aufweist, das mindestens einen inneren geschlossenen Abschnitt (7) aufweist, der die am Umfang gelegene Öffnung (8) bildet und einen äußeren am Umfang gelegenen Abschnitt (5, 6), der den Sitz für einen Reifen (P) bildet.

3. Rad gemäß Anspruch 1, **dadurch gekennzeichnet, dass** der mindestens eine geschlossene Abschnitt (7) eine aufgeworfene Form mit einer oder mehreren Wellen aufweist und ungefähr symmetrisch ist mit Bezug auf die Hauptebene des Rades, die im wesentlichen senkrecht ist zu deren Achse (a).

4. Rad gemäß Anspruch 1, **dadurch gekennzeichnet, dass** das strukturelle Material (9) ein geschäumtes polymeres Material ist.

5. Rad gemäß Anspruch 4, **dadurch gekennzeichnet, dass** das strukturelle Material (9) ein einspritzbar, polymeres Material ist.

6. Rad gemäß Anspruch 4 oder 5, **dadurch gekennzeichnet, dass** das strukturelle Material (9) ein verstärktes polymeres Material ist.

7. Rad gemäß Anspruch 1, **dadurch gekennzeichnet, dass** der äußere kreisförmige Abschnitt (2) aus einem wahlweise verstärkten, metallischen Material ist.

8. Rad gemäß Anspruch 1, **dadurch gekennzeichnet, dass** der äußere kreisförmige Abschnitt (2) aus einem wahlweise verstärkten, polymeren Material ist.

9. Verfahren zur Hersteilung eines Fahrzeugrads mit den Schritten:
a) Bilden eines äußeren kreisförmigen Abschnitts aus einem steifen Material, in dem mindestens eine am Umfang gelegene, geschlossene Öffnung gebildet ist,
b) Bilden einer zentralen Nabe aus einem steifen Material,
c) koaxial Verbinden der zentralen Nabe mit dem äußeren kreisförmigen Abschnitt,
d) Einspritzen eines strukturellen Materials in die mindestens eine geschlossene, am Umfang gelegene Öffnung des äußeren kreisförmigen Abschnitts, wobei dieses strukturelle Material einen hohen Kompressions-Elastizitätsmodul und hohen Schub-Elastizitätsmodul und niedrige Dichte aufweist und dieses Material kontinuierlich ist und gleichförmig an den inneren Oberflächen der Öffnung anliegt.

10. Verfahren gemäß Anspruch 9, **dadurch gekennzeichnet, dass** der Schritt des Verfüliens der Öffnung vollzogen wird nach dem Schritt des Bildens des äußeren kreisförmigen Abschnitts.

11. Verfahren gemäß Anspruch 9, **dadurch gekennzeichnet, dass** der Schritt des Verfüllens der Öffnung vollzogen wird vor oder während des Schritts des Bildens des äußeren kreisförmigen Abschnitts.

12. Verfahren gemäß Anspruch 9, **dadurch gekennzeichnet, dass** das strukturelle Füllmaterial ein reaktives, polymeres Material ist, das innerhalb der mindestens einen am Umfang gelegenen Öffnung geschäumt wird.

13. Verfahren gemäß Anspruch 9, **dadurch gekennzeichnet, dass** das strukturelle Füllmaterial ein polymeres Material im plastischen Zustand ist, das in die mindestens eine am Umfang gelegenen Öffnung gespritzt wird.

14. Verfahren gemäß Anspruch 9, **dadurch gekennzeichnet, dass** der äußere kreisförmige Abschnitt mit Verfahren hergestellt wird, die zum Beispiel aus Extrusion, Formgießen, Gießen oder Formen von Profilen ausgewählt sind, wobei diese alle wahlweise verstärktes metallisches Material verwenden.

15. Verfahren gemäß Anspruch 14, **dadurch gekennzeichnet, dass** der äußere kreisförmige Abschnitt hergestellt wird ausgehend von einem Abschnitt eines Profils, dessen Länge gleich ist zu, oder ein Vielfaches vom Umfang des Rads, und geeignet gebogen und an seinen Enden verbunden wird.

16. Verfahren gemäß Anspruch 9, **dadurch gekennzeichnet, dass** der äußere kreisförmige Abschnitt mit Verfahren hergestellt wird, die zum Beispiel aus Formgießen, Autoclav-Formen, Harzübertragen oder Einspritzen von möglicherweise verstärkten polymeren Materialien ausgewählt sind.

## Revendications

1. Roue de véhicule, en particulier pour cycles et motocyclettes, comprenant une partie circulaire extérieure ou jante (2) adaptée pour supporter un pneumatique (P) et ayant au moins une cavité intérieure circonférentielle fermée (8), un moyeu central (3) qui est coaxial à ladite partie circulaire et des éléments sensiblement radiaux (4) servant à relier ladite partie extérieure (2) audit moyeu (3), **caractérisée en ce que** ladite cavité intérieure circonférentielle (8) est uniformément remplie d'une matière structurelle continue (9), formée par injection et ayant un haut module d'élasticité à la compression, un haut module d'élasticité au cisaillement, et une faible densité, ladite matière étant continue et adhérant entièrement à la surface intérieure de ladite cavité intérieure circonférentielle (8).

2. Roue selon la revendication 1, dans laquelle la section transversale de ladite partie circulaire (2) a un profil qui comprend au moins une portion fermée intérieure (7) qui forme ladite cavité circonférentielle (8) et une portion périphérique extérieure (5, 6) qui forme l'appui pour un pneumatique (P).

3. Roue selon la revendication 1, dans laquelle ladite au moins une portion fermée (7) présente une forme lobée à un ou plusieurs lobes, et est approximativement symétrique par rapport au plan principal d'agencement de la roue, qui est sensiblement perpendiculaire à son axe (a).

4. Roue selon la revendication 1, dans laquelle ladite matière structurelle (9) est une matière polymère capable de se mettre en mousse.

5. Roue selon la revendication 4, dans laquelle ladite matière structurelle (9) est une matière polymère injectable.

6. Roue selon la revendication 4 ou 5, dans laquelle ladite matière structurelle (9) est une matière polymère renforcée.

7. Roue selon la revendication 1, dans laquelle ladite partie circulaire extérieure (2) est faite d'une matière métallique facultativement renforcée.

8. Roue selon la revendication 1, dans laquelle ladite partie circulaire extérieure (2) est faite d'une matière polymère éventuellement renforcée.

9. Procédé pour produire une roue de véhicule comprenant les étapes constituant à :
a) former une partie circulaire extérieure faite d'une matière rigide, dans laquelle est formée au moins une cavité circonférentielle fermée ;
b) former un moyeu central fait d'une matière rigide ;
c) assembler ledit moyeu central à la partie circulaire extérieure coaxialement à celle-ci, à l'aide d'éléments de liaison sensiblement radiaux ;
**caractérisé en ce qu'**il comprend en outre les étapes consistant à :
d) injecter une matière structurelle dans ladite au moins une cavité circonférentielle fermée de la partie circulaire extérieure ;
ladite matière structurelle ayant un haut module d'élasticité à la compression et un haut module d'élasticité au cisaillement et une faible densité, ladite matière qui remplit ladite cavité étant continue et adhérant uniformément aux parois intérieures de ladite cavité.

10. Procédé selon la revendication 9, dans lequel l'étape de remplissage de la cavité est exécutée après l'étape de formation de la partie circulaire extérieure.

11. Procédé selon la revendication 9, dans lequel l'étape de remplissage de la cavité est exécutée avant ou pendant l'étape de formation de la partie circulaire extérieure.

12. Procédé selon la revendication 9, dans lequel ladite matière de remplissage structurelle est une matière polymère réactive mise en mousse à l'intérieur de ladite au moins une cavité circonférentielle.

13. Procédé selon la revendication 9, dans lequel ladite matière structurelle est une matière polymère à l'état plastique, injectée dans ladite au moins une cavité circonférentielle.

14. Procédé selon la revendication 9, dans lequel ladite partie circulaire extérieure est produite avec des procédés choisis, par exemple parmi l'extrusion, le moulage, la coulée ou le formage de profilés, qui utilisent tous une matière métallique facultativement renforcée.

15. Procédé selon la revendication 14, dans lequel ladite partie circulaire extérieure est produite en partant d'une portion d'un profilé dont la longueur est égale à la circonférence de la roue ou à un multiple de cette circonférence, et est convenablement courbée et réunie à ses extrémités.

16. Procédé selon la revendication 9, dans lequel ladite partie circulaire extérieure est produite par des procédés qui sont choisis, par exemple parmi le moulage, le formage à l'autoclave, le transfert de résine ou l'injection de matières polymères éventuellement renforcées.
